# EUROPÄISCHE PATENTSCHRIFT

(11) **EP 1 614 341 B1**
(45) Veröffentlichungstag und Bekanntmachung des Hinweises auf die Patenterteilung: **02.04.2008**
(21) Anmeldenummer: 05010410.8
(22) Anmeldetag: 13.05.2005
(51) Int. Cl.: A01F 15/14

(54) **Rückhaltemittel für das Bindemittel an Rundballenpressen**
Guard for the tying material in a rotobaler
Dispositif de protection pour le material de liage dans une presse à balles rondes

(30) Priorität: 08.07.2004 DE 102004033252
(43) Veröffentlichungstag der Anmeldung: 11.01.2006
(73) Patentinhaber: Usines Claas France, 57148 Woippy (FR)
(72) Erfinder: Meaux, Fabien, 57000 Metz (FR); Gette, Christoph, 57300 Tremery (FR)

(56) Entgegenhaltungen:
- DE-A1- 3 428 904
- DE-A1- 19 530 530
- DE-U1- 8 912 253
- US-A- 2 975 700

## Beschreibung

Die Erfindung betrifft ein Rückhaltemittel für das Bindemittel für Ballen an einer Rundballenpresse gemäß dem Oberbegriff des Anspruchs 1.

Das GM 89 12 253 U1 offenbart eine landwirtschaftliche Rundballenpresse in der das Bindemittel zum Binden des fertig gewickelten Ballens zwischen zwei Walzen in die Presskammer der Rundballenpresse geführt wird. Aufgrund der Rotation des Ballens sowie der Rotation der Walzen wird das Bindemittel von dem Ballen mitgenommen und legt sich auf diese Weise um den Ballen.
Da die den Ballen formenden Walzen im Uhrzeigersinn angetrieben werden, besteht die Gefahr, dass das Bindemittel zwischen zwei Walzen gerät und nach außen heraus läuft. Hierdurch kann es zu Bindemittelstauungen zwischen den Walzen kommen, so dass der Wickelvorgang uneinheitlich verläuft oder sogar abgebrochen werden muss.
Aus diesem Grund sind zwischen den Walzen Materialstreifen angeordnet, die den Einzug von Bindematerial verhindern sollen.
Nachteilig an dieser Ausführung ist, dass nur ein Teilbereich des durch die Walzen gebildeten Spaltes von den Materialstreifen abgedeckt wird, so dass das eigentliche Problem nur teilweise beseitigt wird. Insbesondere besteht immer noch eine Lücke zwischen dem Materialstreifen und der profilierten Oberfläche der Walzen, so dass das sehr dünne Bindematerial weiterhin zwischen dem Materialstreifen und der Walze heraus laufen kann.

Der vorliegenden Erfindung liegt daher die Aufgabe zugrunde einen sicheren Netzbindevorgang zu gewährleisten, ohne dass die Gefahr des Herauslaufens des Bindemittels besteht.
Diese Aufgabe wird durch die kennzeichnenden Merkmale des Anspruchs 1 gelöst.

Indem die Oberfläche wenigstens eines Pressmittels von zumindest einem Rückhaltemittel überstrichen wird, wird vermieden, dass das Bindemittel von den sich drehenden Pressmitteln, beispielsweise in Form von Walzen, eingezogen wird und sich um die Walzen wickelt, beziehungsweise nach außen tritt und hierdurch den Wickelvorgang beeinträchtigt, so dass der fertig verdichtete Ballen nach der Ablage auf dem Feld wieder aufgehen kann.

Dadurch, dass ein erstes Rückhaltemittel die Oberfläche eines ersten Pressmittels überstreicht und ein zweites Rückhaltemittel die Oberfläche eines zu dem ersten Pressmittel benachbartem zweiten Pressmittel überstreicht, kann das Bindemittel an keiner Stelle der benachbarten Pressmittel vorbei wandern und aus der Presskammer heraus treten.

Dadurch, dass die Rückhaltemittel zwischen mindestens zwei benachbarten Pressmitteln angeordnet sind, wobei das erste Rückhaltemittel die Oberfläche des ersten Pressmittels näher zu dem von dem ersten und zweiten Pressmittel gebildeten Spalt überstreicht als das zweite Rückhaltemittel die Oberfläche des zweiten Pressmittels überstreicht, wird gewährleistet, das die Rückhaltemittel stets optimal zu der Oberfläche der den Rückhaltemitteln zugeordneten Pressmittel stehen.

Indem das erste Rückhaltemittel in einem bestimmten ersten Anstellwinkel die Oberfläche des ersten Pressmittels überstreicht und das zweite Rückhaltemittel die Oberfläche des zweiten Pressmittels in einem bestimmten zweiten Anstellwinkel überstreicht, wobei die ersten und zweiten Anstellwinkel vorteilhafterweise spitze Winkel sind, wird die Oberfläche der gegensinnig angetriebenen Pressmittel nie entgegen der Drehrichtung der Pressmittel von den Rückhaltemitteln kontaktiert. Hierdurch wird der Verschleiß der Rückhaltemittel gering gehalten und die Bewegung der Pressmittel nicht eingeschränkt bzw. abgebremst.

Indem die Rückhaltemittel als Bürsten oder elastische Finger ausgebildet sind, können die elastischen Borsten der Bürsten während des Abtastens der Oberfläche der Pressmittel den Pressmitteln ausweichen, ohne dass es zu Verformungen der Borsten kommt und demgemäss die Oberfläche der Pressmittel stets gleichmäßig überstrichen wird. Ferner wird durch das Kontaktieren der Oberfläche der Pressmittel mit den weichen Borsten keine Lärmbelästigung verursacht. Außerdem können kleinere Steine, die mit dem Erntegut in der Presskammer vermischt sind, problemlos zwischen den Borsten der Bürsten hindurchwandern.

In vorteilhafter Weise überstreichen die Rückhaltemittel die Oberflächen der Pressmittel in ihrer gesamten Breite oder in einem Teilbereich. Durch das Überstreichen der gesamten Breite der Pressmittel kann das Bindemittel an keiner Stelle zwischen Pressmittel und Rückhaltemittel nach außen dringen, da sich hierfür keine Lücke bietet.

Durch die Austauschbarkeit der Rückhaltemittel können verschliessene Rückhaltemittel problemlos ersetzt werden.

Indem die Rückhaltemittel während des Netzbindevorgangs die Oberfläche wenigstens eines Pressmittels überstreichen und nach Abschluss des Netzbindevorgangs von der Oberfläche des Pressmittels weg bewegt werden, werden die Rückhaltemittel nur im Bedarfsfall eingesetzt, so dass der Verschleiß der Rückhaltemittel gering gehalten wird.

Dadurch das den Rückhaltemitteln ein gemeinsamer Verschwenkmechanismus zugeordnet ist, werden alle Rückhaltemittel bei dem Verschwenkvorgang gleichzeitig und synchron zueinander bewegt, womit die Oberflächen unterschiedlicher Pressmittel stets gleichmäßig kontaktiert werden.

Weitere vorteilhafte Ausgestaltungen sind Gegenstand weiterer Unteransprüche und werden nachfolgend anhand von Zeichnungen näher erläutert.

Es zeigen:
- Figur 1:: eine Rundballenpresse in Seitenansicht mit erfindungsgemäßem Rückhaltemittel
- Figur 2:: eine Detailansicht des erfindungsgemäßen Rückhaltemittels.

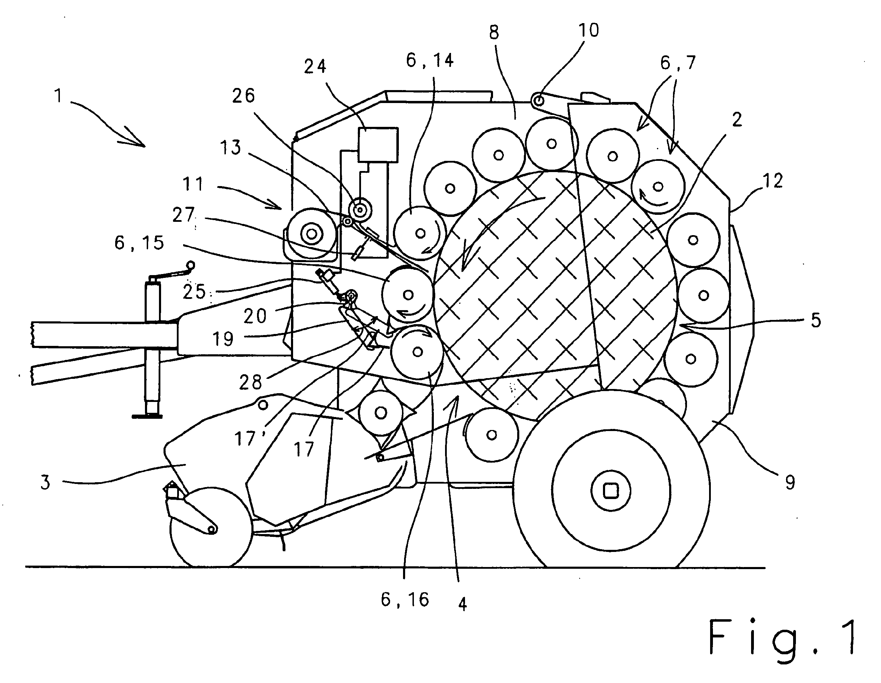

In der Figur 1 ist eine an sich bekannte landwirtschaftliche Rundballenpresse 1 für Erntegut abgebildet. Die Rundballenpresse 1 dient der Aufnahme und dem Pressen von zu einem Schwad auf dem Boden abgelegten Erntegut zu einem Rundballen 2.
Die Aufnahme des auf dem Boden abgelegten Erntegutschwads erfolgt über eine Erntegutaufnahmevorrichtung 3, die das Erntegut über eine Gutzuführöffnung 4 dem Pressraum 5 zuführt. Der Pressraum 5 wird umfangsseitig von Pressmitteln 6 begrenzt. Vorliegend sind die Pressmittel 6 als im Uhrzeigersinn angetriebene Walzen 7 ausgeführt, wobei die Drehachsen der Walzen 7 parallel zueinander verlaufen und auf einem Kreisbogen liegen.
Der Pressraum 5 selbst kann von fester oder variabler Größe sein und dient der Verdichtung des aufgenommenen Ernteguts zu einem Ballen 2.
In an sich bekannter Weise ist der Pressraum 5 in eine vordere Hälfte 8 und eine rückwärtige Hälfte 9 unterteilt, wobei die Hälften 8, 9 in einem oberen Lager 10 miteinander verbunden sind, so dass die rückwärtige Hälfte 9 der Rundballenpresse 1 zum Auswerfen des Ballens 2 in herkömmlicher Weise aufgeschwenkt werden kann.

Im oberen Bereich der vorderen Pressenhälfte 8 ist eine Bindemittelzuführvorrichtung 11 angeordnet, die mit dem Pressengehäuse 12 fest verbunden ist. Die Bindemittelzuführvorrichtung 11 fördert das Bindemittel 13 zwischen zwei benachbarten Walzen 14, 15 hindurch, so dass das Bindemittel 13 auf die Mantelfläche des im Pressraum 5 fertig verdichteten Ballens 2 geführt wird. Durch die Rotation des Ballens 2 sowie der Rotation der Pressmittel 6 wird das Bindemittel 13 mitgenommen und umwickelt in Abhängigkeit von der Anzahl der Rotationen des Ballens 2 diesen vollständig und meist mehrfach. Im Anschluss an den Wickelprozess wird das Bindemittel 13 durch eine Trenneinrichtung 27 abgetrennt.
Danach wird der Ballen 2 durch das aufwärtige Verschwenken der rückwärtigen Pressenhälfte 9 aus dem Pressraum 5 heraus gefördert und auf den Boden hinter der Presse 1 abgelegt.

Im Anschluss an die Ballenablage wird die Erntefahrt fortgesetzt und ein neuer Ballen 2 wird gebildet und mit Bindemittel 13 ummantelt.
Das Bindemittel 13 selbst kann unterschiedlich ausgeführt sein, beispielsweise als Netz oder Folie.

Damit sich das Bindemittel 13 nicht um eine sich drehende Walze 6, 7 wickelt oder durch den von zwei benachbarten Walzen 6, 7 gebildeten Spalt 23 nach außen tritt und hierdurch den Wickelvorgang beeinträchtigt, was zu einem nur teilweise oder lose gebundenen Ballen 2 führen kann, wird erfindungsgemäß die Oberfläche wenigstens eines Pressmittels 6 von zumindest einem Rückhaltemittel 17 überstrichen.

Dabei ist ein erstes Rückhaltemittel 17 mit einem zweiten Rückhaltemittel 17'verbunden, wobei das erste und zweite Rückhaltemittel 17, 17' mit ihrem dem Pressraum 5 abgewandten Ende die Oberfläche der zueinander benachbarten ersten und zweiten Walzen 6, 15, 16 berühren. Durch den Kontakt des ersten Rückhaltemittels 17 mit der Oberfläche einer ersten Walze 6, 16 sowie durch den Kontakt des zweiten Rückhaltemittels 17' mit der Oberfläche einer zur ersten Walze 6, 16 benachbarten zweiten Walze 6, 15 wird gewährleistet, dass sich das Bindemittel 13 nicht um die von den ersten und zweiten Rückhaltemitteln 17, 17' überstrichenen Oberflächen zueinander benachbarter Walzen 6, 15, 16 wickelt.

Deshalb überstreicht das erste Rückhaltemittel 17 die Oberfläche der ersten Walze 16 der benachbarten Walzen 6, 15, 16 näher zu dem durch den von der ersten und zweiten Walze 6, 15, 16 gebildeten Spalt 23 als das zweite Rückhaltemittel 17' die Oberfläche der zweiten Walze 6, 15. Durch diese Anordnung kann sich das Bindemittel 13 weder um die erste Walze 6, 16 noch um die zweite Walze 6, 15 wickeln und nach außen treten. Zudem wirkt der Kontakt der ersten und zweiten Rückhaltemittel 17, 17' nicht entgegen der durch Pfeile gekennzeichneten Drehrichtungen der ersten und zweiten Walzen 6, 15, 16.

Um einen optimalen Kontakt der ersten und zweiten Rückhaltemittel 17, 17' zu den zueinander benachbarten ersten und zweiten Walzen 6, 15, 16 herzustellen, überstreicht das erste Rückhaltemittel 17 in einem bestimmten ersten Anstellwinkel a die erste Walze 6, 16 und das zweite Rückhaltemittel 17' überstreicht in einem bestimmten zweiten Anstellwinkel b die zweite Walze 6, 15. Der erste Anstellwinkel a wird hierbei von der Kontaktstelle des ersten Rückhaltemittels 17 mit der Oberfläche der ersten Walze 6, 16 und der zweite Anstellwinkel b von der Kontaktstelle des zweiten Rückhaltemittels 17' mit der Oberfläche der zweiten Walze 6, 15 gebildet. In der Praxis hat sich besonders bewährt, dass die ersten und zweiten Anstellwinkel a, b spitze Winkel sind. Indem das erste Rückhaltemittel 17 in einem spitzen ersten Anstellwinkel a die Oberfläche der ersten Walze 6, 16 und das zweite Rückhaltemittel 17' in einem spitzen zweiten Anstellwinkel b die Oberfläche der zweiten Walze 6, 15 berührt, kontaktieren die ersten und zweiten Rückhaltemittel 17, 17' die Oberflächen der zu der ersten Walze 6, 16 gegensinnig angetriebenen zweiten Walze 6, 15 in Drehrichtung der jeweilig kontaktierten ersten oder zweiten Walze 6, 15, 16. Demzufolge ist der Reibwiderstand und der Verschleiß der ersten und zweiten Rückhaltemittel 17, 17' insgesamt sehr gering.

Die Anordnung der Rückhaltemittel 17, 17' zu den benachbarten ersten und zweiten Walzen 15, 16 ist auf beliebig viele Paare benachbarter als Walzen 7 ausgeführter Pressmittel 6 innerhalb der Rundballenpresse 1 ausweitbar.

Außerdem ist es vorteilhaft, dass die Rückhaltemittel 17 die gesamte Breite der Walzen 6, 7 überstreichen und damit keine Lücke zu der Oberfläche der Walzen 6, 7 bilden, durch die das Bindemittel 13 austreten kann. In an sich bekannter Weise sind den Rückhaltemitteln 17, 17' nicht abgebildete Winkelprofile zugeordnet, die den Rückhaltemitteln 17, 17' die erforderliche Stabilität zum Überstreichen der Pressmittel 6 verleihen.

Die ersten und zweiten Rückhaltemittel 17, 17' sind mit ihren den Pressraum 5 abgewandten Ende durch Profile 18 miteinander verbunden. Die Profile 18 sind mit verschwenkbaren Hebeln 19 verbunden. Die Hebel 19 sind auf eine Welle 20 aufgesetzt, die drehbar in das Pressengehäuse 12 integriert ist.

In an sich bekannter Weise kann ein Wellenende aus dem Pressengehäuse 12 herausragen und mit einem Stellhebel verbunden sein. Durch die Betätigung des Stellhebels können die ersten und zweiten Rückhaltemittel 17, 17' in unterschiedliche durch einen Pfeil 28 gekennzeichnete Positionen verschwenkt werden. So wären beispielsweise durch manuelles Betätigen des Stellhebels die ersten und zweiten Rückhaltemittel 17, 17' in eine Betriebs- und Außerbetriebsstellung verschwenkbar. Das Verstellen in eine Betriebsstellung, in der die ersten und zweiten Rückhaltemittel 17, 17' die Oberflächen der ersten und zweiten Walzen 6, 15, 16 überstreichen, ist während des Netzbindevorgangs erforderlich und in dünner Strichlinie dargestellt. Hingegen ist es zweckmäßig die in breiter Strichlinie abgebildete Betriebsstellung, in der die Rückhaltemittel 17, 17'die Oberflächen der ersten und zweiten Walze 6, 15, 16 nicht mehr berühren, nach Abschluss des Bindevorgangs einzuleiten, da dann keine Gefahr des Umwickelns der ersten und zweiten Walzen 6, 15, 16 mit Bindemittel 13 besteht.
Insgesamt werden hierdurch die Rückhaltemittel 17, 17'nur im tatsächlichen Bedarfsfall und damit verschleißschonend eingesetzt.
Es liegt im Rahmen der Erfindung den zuvor beschriebenen Verschwenkvorgang automatisch oder von der Fahrerkabine eines die Rundballenpresse 1 ziehenden und nicht abgebildeten Schleppers steuerbar zu machen. Hierbei ist dem ersten und zweiten Rückstellmittel 17, 17' ein gemeinsamer Verschwenkmechanismus 25 zugeordnet. Der Verschwenkmechanismus 25 ist aus wenigstens einem Hebel 19 und einem Profil 18 zusammengesetzt, wobei der Hebel 19 drehbar auf einer Welle 20 angeordnet ist.
Die Betriebs- und Außerbetriebsstellung der durch den Verschwenkmechanismus 25 angelenkten Rückhaltemittel 17, 17' kann dabei von unterschiedlichen Parametern abhängig gemacht werden. So kann beispielsweise die Einleitung der Betriebsstellung in Abhängigkeit von der Ballendichte, dem Ballenumfang und/oder dem Einleiten des Bindevorgangs und die Außerbetriebsstellung von dem Auswurf des Ballens 2 abhängig gemacht werden. Bei Erreichen einer bestimmten Ballendichte wird von einer Steuereinrichtung 24 der Antrieb 26 angesteuert und das Bindemittel 13 über dem Pressraum 5 zugeführt. Die Steuereinrichtung 24 steuert gleichzeitig den Verschwenkmechanismus 25 an, so dass die Rückhaltemittel 17, 17' an die Oberfläche der Pressmittel 6 herangeführt werden. Nach der erfolgten Bindung des Ballens 2 wird das Bindemittel 13 durch eine Trenneinrichtung 27 abgeschnitten und der Antrieb 26 abgeschaltet. Infolgedessen steuert die Steuereinrichtung 24 wieder den Verschwenkmechanismus 25 an und die Rückhaltemittel 17, 17' werden von der Oberfläche der Pressmittel 6 weg bewegt, so dass die Pressmittel 6 nicht mehr von den Rückhaltemitteln 17, 17' überstrichen werden.

Erfindungsgemäß kann dieser Verschwenkmechanismus 25 mit beliebig vielen Rückhaltemitteln 17 in Wirkverbindung stehen oder aber auch belieb viele Verschwenkmechanismen 25 beliebig viele Rückhaltemittel 17, 17' ansteuern.

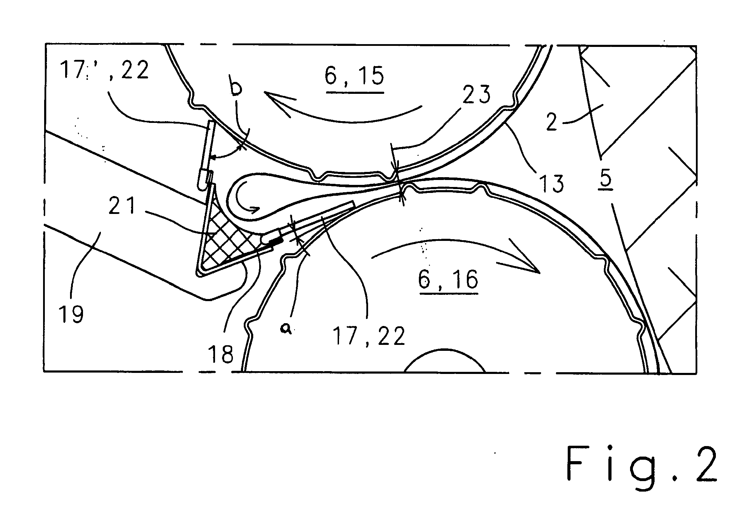

In der Figur 2 ist eine Detailansicht des erfindungsgemäßen ersten und zweiten Rückhaltemittels 17, 17'abgebildet. Hieraus ist erkennbar, dass das erste Rückhaltemittel 17 schmaler ausgeführt ist als der Spalt 23, so dass die Rotation der ersten sowie der zweiten Walze 6, 15, 16 nicht behindert wird. In Bezug auf das zweite Rückhaltemittel 17' kann hingegen eine breitere Ausführungsform gewählt werden, da an der Stelle, an der das Rückhaltemittel 17'die Oberfläche der zweiten Walze 6, 15 berührt, hinreichend Platz vorhanden ist.

Die ersten und zweiten Rückhaltemittel 17, 17' sind mit den Profilen 18 verbunden. Durch die lösbare Ausführung der Profile 18 kann das erste oder zweite Rückhaltemittel 17, 17' einfach und zeitsparend ausgewechselt werden.
Zwischen den Profilen 18 kann außerdem ein Formteil 21 eingesetzt sein. Das Formteil 21 hat die Aufgabe den Leerraum, der durch die Profile 18 im rückwärtigen, dem Pressraum 5 abgewandten Bereich gebildet wird, zumindest teilweise auszufüllen. Hierdurch wird der gebildete Leerraum verkleinert, so dass sich die Menge an Bindemittel 13, die in diesen Leerraum hinein wandern und sich außerhalb des Pressraums 5 ansammeln kann, verringert.

In Bezug auf die Rückhaltemittel 17, 17' hat sich in der Praxis die Ausführungsform als Bürste 22 als besonders vorteilhaft erwiesen. Der Einsatz von Bürsten 22 als Rückhaltemittel 17, 17' hat sich in erster Linie dadurch bewährt, dass die elastischen Borsten der Bürsten 22 während des Abtastens der Oberfläche der Walzen 6, 7 den rotierenden Walzen 6, 15, 16 ausweichen, ohne dass es zu Verformungen der Borsten kommt. Infolgedessen werden die Walzen 6, 15, 16 stets gleichmäßig überstrichen.
Zudem entstehen keine Lärmbelästigungen während des Kontaktierens der weichen und elastischen Borsten mit den Walzen 6, 15, 16. Außerdem können kleinere Steine, die sich in dem Erntegut innerhalb des Pressraums 5 befinden leicht durch die Borsten hindurch, aus der Presse 1 heraus, wandern. Letztlich kann das Nachjustieren der Bürsten 22 gegen die Walzen 6, 15, 16 einfacher erfolgen, da die Bürsten 22 sehr dehnbar sind und keinen nachteiligen Druck durch die Berührung mit der Oberfläche der Walzen 6, 15, 16 gegen diese ausüben und zudem in Laufrichtung auf der Oberfläche der jeweilige Walzen 6, 15, 16 aufliegen. Schließlich wird durch den Kontakt der Bürste 22 mit den Walzen 6, 15, 16 ein Reinigungseffekt der Walzen 6, 15, 16 erzielt.
Neben der Ausführung als Bürste sind aber auch andere Ausführungsformen, wie beispielsweise elastische Finger, verwendbar.

In abgewandelter Form der Erfindung kann ein Rückhaltemittel 17 in den von zwei benachbarten Pressmitteln 6 gebildeten Spalt 23 angeordnet werden, so dass das Rückhaltemittel 17 gleichzeitig die Oberfläche des einen wie auch der benachbarten Pressmittel 6 beaufschlagt. Durch diesen dauerhaften gleichzeitigen Kontakt des Rückhaltemittels 17 mit den Oberflächen zweier benachbarter Pressmittel 6 wird der Spalt 23 zwischen den Pressmitteln 6 gänzlich geschlossen, so dass das Bindemittel 13 nicht durch den Spalt 16 hindurch treten kann.

Es liegt im Rahmen des Könnens eines Fachmanns die beschriebenen Ausführungsbeispiele in nicht dargestellter Weise abzuwandeln oder in anderen Maschinen einzusetzen, um die beschriebenen Effekte zu erzielen, ohne dabei den Rahmen der Erfindung wie in den Ansprüchen definiert zu verlassen.

### Bezugszeichenliste:

- 1: Rundballenpresse
- 2: Rundballen
- 3: Erntegutaufnahmevorrichtung
- 4: Gutzuführöffnung
- 5: Pressraum
- 6: Pressmittel
- 7: Walzen
- 8: vordere Pressraumhälfte
- 9: Rückwärtige Pressraumhälfte
- 10: Lager
- 11: Bindemittelzuführvorrichtung
- 12: Pressengehäuse
- 13: Bindemittel
- 14: Walze
- 15: Walze
- 16: Walze
- 17: Rückhaltemittel
- 17': Rückhaltemittel
- 18: Profil
- 19: Hebel
- 20: Welle
- 21: Formteil
- 22: Bürste
- 23: Spalt
- 24: Steuereinrichtung
- 25: Verschwenkmechanismus
- 26: Antrieb
- 27: Trenneinrichtung
- 28: Verschwenkrichtung Hebel
- a: erster Anstellwinkel
- b: zweiter Anstellwinkel

## Patentansprüche

1. Rundballenpresse (1) mit einem Pressraum (5), wobei der Pressraum (5) umfangsseitig von einer Vielzahl von Pressmitteln (6) umgeben wird sowie einer Bindemittelzufürvorrichtung (11), die das Bindemittel (13) über eine Bindemitteleinlassöffnung dem Pressraum (5) zuführt,
**dadurch gekennzeichnet, dass**
die Oberfläche wenigstens eines Pressmittels (6) von zumindest einem Rückhaltemittel (17) überstrichen wird.

2. Rundballenpresse nach Anspruch 1,
**dadurch gekennzeichnet, dass**
ein erstes Rückhaltemittel (17) die Oberfläche eines ersten Pressmittels (6, 16) überstreicht und ein zweites Rückhaltemittel (17') die Oberfläche eines zu dem ersten Pressmittel (6, 16) benachbartem zweiten Pressmittels (6, 15) überstreicht.

3. Rundballenpresse nach einem oder mehreren der vorangegangenen Ansprüche,
**dadurch gekennzeichnet, dass**
die Rückhaltemittel (17, 17') zwischen mindestens zwei benachbarten Pressmitteln (6, 15, 16) angeordnet sind, wobei das erste Rückhaltemittel (17) die Oberfläche des ersten Pressmittels (6, 16) näher zu dem von dem ersten Pressmittel (16) und dem benachbarten zweiten Pressmittel (6, 15) gebildeten Spalt (23) überstreicht als das zweite Rückhaltemittel (17') die Oberfläche des zweiten Pressmittels (6, 15) überstreicht.

4. Rundballenpresse nach einem oder mehreren der vorangegangenen Ansprüche,
**dadurch gekennzeichnet, dass**
die Rückhaltemittel (17, 17') zwischen mindestens zwei benachbarten Pressmitteln (6, 15, 16) angeordnet sind, wobei das erste Rückhaltemittel (17) in einem ersten Anstellwinkel (a) die Oberfläche des ersten Pressmittels (6, 16) und das zweite Rückhaltemittel (17') die Oberfläche des zweiten Pressmittels (6, 15) in einem zweiten Anstellwinkel (b) überstreicht.

5. Rundballenpresse nach Anspruch 4,
**dadurch gekennzeichnet, dass**
die ersten und zweiten Anstellwinkel (a, b) spitze Winkel sind.

6. Rundballenpresse nach einem oder mehreren der vorangegangenen Ansprüche,
**dadurch gekennzeichnet, dass**
die Rückhaltemittel (17, 17') durch Bürsten (22) oder elastische Finger gebildet werden.

7. Rundballenpresse nach einem oder mehreren der vorangegangenen Ansprüche,
**dadurch gekennzeichnet, dass**
die Rückhaltemittel (17, 17') durchgehend oder unterbrochen ausgeführt sind.

8. Rundballenpresse nach einem oder mehreren der vorangegangenen Ansprüche,
**dadurch gekennzeichnet, dass**
die Rückhaltemittel (17, 17') die Oberfläche der Pressmittel (6) in ihrer gesamte Breite oder in einem Teilbereich der Pressmittel (6) überstreichen.

9. Rundballenpresse nach einem oder mehreren der vorangegangenen Ansprüche,
**dadurch gekennzeichnet, dass**
die Rückhaltemittel (17, 17') austauschbar sind.

10. Rundballenpresse nach einem oder mehreren der vorangegangenen Ansprüche,
**dadurch gekennzeichnet, dass**
die Rückhaltemittel (17, 17') verstellbar sind.

11. Rundballenpresse nach einem oder mehreren der vorangegangenen Ansprüche,
**dadurch gekennzeichnet, dass**
die Rückhaltemittel (17, 17') während des Netzbindevorgangs die Oberfläche wenigstens eines Pressmittels (6) überstreichen und nach Abschluss des Netzbindevorgangs von der Oberfläche des zumindest einen Pressmittels (6) weg bewegt werden.

12. Rundballenpresse nach einem oder mehreren der vorangegangenen Ansprüche,
**dadurch gekennzeichnet, dass**
die Pressmittel (6) durch Walzen (7) gebildet werden.

13. Rundballenpresse nach einem oder mehreren der vorangegangenen Ansprüche,
**dadurch gekennzeichnet, dass**
die Rückhaltemittel (17, 17') einem gemeinsamen Verschwenkmechanismus (25) zugeordnet sind.

14. Rundballenpresse nach Anspruch 13,
**dadurch gekennzeichnet, dass**
der Verschwenkmechanismus (25) aus wenigstens einem Hebel (19) und einem Profil (18) zusammengesetzt ist, wobei der Hebel (19) drehbar auf einer Welle (20) angeordnet ist.

15. Rundballenpresse nach Anspruch 13,
**dadurch gekennzeichnet, dass**
der Verschwenkmechanismus (25) die Rückhaltemittel (17, 17') in eine Betriebnahmestellung und eine Außerbetriebnahmestellung bringt, wobei die Rückhaltemittel (17, 17') in der Betriebnahmestellung die Oberflächen der Pressmittel (6) überstreichen und in der Außerbetriebnahmestellung die Oberflächen der Pressmittel (6) nicht mehr kontaktieren.

16. Rundballenpresse nach Anspruch 15,
**dadurch gekennzeichnet, dass**
die Betriebnahmestellung und Außerbetriebnahmestellung der Rückhaltemittel (17, 17') von unterschiedlichen Parametern abhängt.

17. Rundballenpresse nach Anspruch 16,
**dadurch gekennzeichnet, dass**
die Parameter für die Einleistung der Betriebnahmestellung die Ballendichte, der Ballenumfang und/oder die Einleitung des Bindevorgangs sind und die Parameter für die Außerbetriebnahmestellung der Auswurf des Ballen (2) ist.

## Claims

1. A round bale press (1) comprising a pressing chamber (5), wherein the pressing chamber (5) is surrounded at its periphery by a plurality of pressing means (6), and a binding means feed device (11) which feeds the binding means (13) to the pressing chamber (5) by way of a binding means intake opening,
**characterised in that**
the surface of at least one pressing means (6) is swept over by at least one retaining means (17).

2. A round bale press according to claim 1 **characterised in that** a first retaining means (17) sweeps over the surface of a first pressing means (6, 16) and a second retaining means (17') sweeps over the surface of a second pressing means (6, 15) which is adjacent to the first pressing means (6, 16).

3. A round bale press according to one or more of the preceding claims **characterised in that** the retaining means (17, 17') are arranged between at least two adjacent pressing means (6, 15, 16), wherein the first retaining means (17) sweeps over the surface of the first pressing means (6, 16) closer to the gap (23) formed by the first pressing means (16) and the adjacent second pressing means (6, 15), than the second retaining means (17') sweeps over the surface of the second pressing means (6, 15).

4. A round bale press according to one or more of the preceding claims **characterised in that** the retaining means (17, 17') are arranged between at least two adjacent pressing means (6, 15, 16), wherein the first retaining means (17) sweeps over the surface of the first pressing means (6, 16) at a first angle of attack (a) and the second retaining means (17') sweeps over the surface of the second pressing means (6, 15) at a second angle of attack (b).

5. A round bale press according to claim 4 **characterised in that** the first and second angles of attack (a, b) are acute angles.

6. A round bale press according to one or more of the preceding claims **characterised in that** the retaining means (17, 17') are formed by brushes (22) or elastic fingers.

7. A round bale press according to one or more of the preceding claims **characterised in that** the retaining means (17, 17') are of a continuous or interrupted configuration.

8. A round bale press according to one or more of the preceding claims **characterised in that** the retaining means (17, 17') sweep over the surface of the pressing means (6) over their entire width or in a partial region of the pressing means (6).

9. A round bale press according to one or more of the preceding claims **characterised in that** the retaining means (17, 17') are interchangeable.

10. A round bale press according to one or more of the preceding claims **characterised in that** the retaining means (17, 17') are displaceable.

11. A round bale press according to one or more of the preceding claims **characterised in that** the retaining means (17, 17') sweep over the surface of at least one pressing means (6) during the net binding operation and after the conclusion of the net binding operation are moved away from the surface of the at least one pressing means (6).

12. A round bale press according to one or more of the preceding claims **characterised in that** the pressing means (6) are formed by rollers (7).

13. A round bale press according to one or more of the preceding claims **characterised in that** the retaining means (17, 17') are associated with a common pivoting mechanism (25).

14. A round bale press according to claim 13 **characterised in that** the pivoting mechanism (25) is composed of at least one lever (19) and a profile member (18), the lever (19) being arranged rotatably on a shaft (20).

15. A round bale press according to claim 13 **characterised in that** the pivoting mechanism (25) moves the retaining means (17, 17') into an operative position and an inoperative position, wherein in the operative position the retaining means (17, 17') sweep over the surfaces of the pressing means (6) and in the inoperative position they no longer contact the surfaces of the pressing means (6).

16. A round bale press according to claim 15 **characterised in that** the operative position and the inoperative position of the retaining means (17, 17') depends on different parameters.

17. A round bale press according to claim 16 **characterised in that** the parameters for initiating the operative position are bale density, bale periphery and/or the initiation of the binding operation and the parameters for the inoperative position are ejection of the bale (2).

## Revendications

1. Presse à balles rondes (1) avec une chambre de pressage (5), dans laquelle la chambre de pressage (5) est entourée sur sa périphérie d'une pluralité de moyens de pressage (6) et d'un dispositif d'amenée de moyen de liage (11) qui introduit le moyen de liage (13) dans la chambre de pressage (5) par une ouverture d'introduction du moyen de liage, **caractérisée en ce que** la surface d'au moins un des moyens de pressage (6) est balayée par au moins un moyen de retenue (17).

2. Presse à balles rondes selon la revendication 1, **caractérisée en ce qu'**un premier moyen de retenue (17) balaie la surface d'un premier moyen de pressage (6, 16) et un deuxième moyen de retenue (17') balaie la surface d'un deuxième moyen de pressage (6, 15) adjacent au premier moyen de pressage (6, 16).

3. Presse à balles rondes selon une ou plusieurs des revendications précédentes, **caractérisée en ce que** les moyens de retenue (17, 17') sont disposés entre au moins deux moyens de pressage (6, 15, 16) adjacents, le premier moyen de retenue (17) balayant la surface du premier moyen de pressage (6, 16) plus près de la fente (23) formée par le premier moyen de pressage (16) et le deuxième moyen de pressage (6, 15) adjacent que le deuxième moyen de retenue (17') ne balaie la surface du deuxième moyen de pressage (6, 15).

4. Presse à balles rondes selon une ou plusieurs des revendications précédentes, **caractérisée en ce que** les moyens de retenue (17, 17') sont disposés entre au moins deux moyens de pressage (6, 15, 16), le premier moyen de retenue (17) balayant la surface du premier moyen de pressage (6, 16) selon un premier angle d'incidence (a) et le deuxième moyen de retenue (17') balayant la surface du deuxième moyen de pressage (6, 15) selon un deuxième angle d'incidence (b).

5. Presse à balles rondes selon la revendication 4, **caractérisée en ce que** le premier et le deuxième angle d'incidence (a, b) sont des angles aigus.

6. Presse à balles rondes selon une ou plusieurs des revendications précédentes, **caractérisée en ce que** les moyens de retenue (17, 17') sont formées par des brosses (22) ou par des doigts élastiques.

7. Presse à balles rondes selon une ou plusieurs des revendications précédentes, **caractérisée en ce que** les moyens de retenue (17, 17') sont continus ou interrompus.

8. Presse à balles rondes selon une ou plusieurs des revendications précédentes, **caractérisée en ce que** les moyens de retenue (17, 17') balaient la surface des moyens de pressage (6) sur toute leur largeur ou sur une partie des moyens de pressage (6).

9. Presse à balles rondes selon une ou plusieurs des revendications précédentes, **caractérisée en ce que** les moyens de retenue (17, 17') sont échangeables.

10. Presse à balles rondes selon une ou plusieurs des revendications précédentes, **caractérisée en ce que** les moyens de retenue (17, 17') sont réglables.

11. Presse à balles rondes selon une ou plusieurs des revendications précédentes, **caractérisée en ce que** les moyens de retenue (17, 17') balaient la surface d'au moins un moyen de pressage (6, 16) pendant l'opération de liage du filet et, après achèvement de l'opération de liage du filet, sont écartés de la surface dudit au moins un moyen de pressage (6, 16).

12. Presse à balles rondes selon une ou plusieurs des revendications précédentes, **caractérisée en ce que** les moyens de pressage (6) sont formés par des rouleaux (7).

13. Presse à balles rondes selon une ou plusieurs des revendications précédentes, **caractérisée en ce que** les moyens de retenue (17, 17') sont associés à un mécanisme commun de pivotement (25).

14. Presse à balles rondes selon la revendication 13, **caractérisée en ce que** le mécanisme de pivotement (25) est constitué d'au moins un levier (19) et un profilé (18), le levier (19) étant monté rotatif sur un arbre (20).

15. Presse à balles rondes selon la revendication 13, **caractérisée en ce que** le mécanisme de pivotement (25) place les moyens de retenue (17, 17') dans une position de service et une position de repos, les moyens de retenue (17, 17') balayant les surfaces des moyens de pressage (6) dans la position de service et n'étant plus au contact de la surface des moyens de pressage (6) dans la position de repos.

16. Presse à balles rondes selon la revendication 15, **caractérisée en ce que** la position de service et la position de repos des moyens de retenue (17, 17') dépendent de différents paramètres.

17. Presse à balles rondes selon la revendication 16, **caractérisée en ce que** les paramètres pour la mise en position de service sont la densité de la balle, le périmètre de la balle et/ou le lancement de l'opération de liage, et le paramètre pour la mise en position de repos est l'éjection de la balle (2).
